# EUROPÄISCHE PATENTSCHRIFT

(11) **EP 4 153 460 B1**
(45) Veröffentlichungstag und Bekanntmachung des Hinweises auf die Patenterteilung: **10.12.2025**
(21) Anmeldenummer: 21723678.5
(22) Anmeldetag: 29.04.2021
(51) Int. Cl.: B60T 17/08, F15B 15/28

(54) **GEHÄUSEEINRICHTUNG UND STÖSSEL FÜR EINE BREMSVORRICHTUNG FÜR EIN FAHRZEUG, BREMSVORRICHTUNG UND VERFAHREN ZUM BETREIBEN EINER BREMSVORRICHTUNG**
HOUSING AND PLUNGER FOR A VEHICLE BRAKING SYSTEM, BRAKING SYSTEM AND CONTROL METHOD OF A BRAKING SYSTEM
BOITIER ET POUSSOIR POUR UN SYSTEME DE FREINAGE DE VEHICULE, SYSTEME DE FREINAGE ET PROCEDE DE CONTROLE DE SYSTEME DE FREINAGE

(30) Priorität: 19.05.2020 DE 102020113523
(43) Veröffentlichungstag der Anmeldung: 29.03.2023
(73) Patentinhaber: KNORR-BREMSE Systeme für Nutzfahrzeuge GmbH, 80809 München (DE)
(72) Erfinder: RÖTHER, Friedbert, 74389 Cleebronn (DE); SCHMAUDER, Thilo, 71732 Tamm (DE)
(86) Internationale Anmeldenummer: PCT/EP2021/061269
(87) Internationale Veröffentlichungsnummer: WO 2021/233659

(56) Entgegenhaltungen:
- WO-A1-2016/012066
- DE-A1- 102014 112 014
- DE-A1- 102016 005 377
- DE-A1- 102016 207 839
- DE-A1- 102017 217 608
- DE-A1- 102019 200 581
- US-A1- 2016 325 723
- US-A1- 2017 043 756
- US-A1- 2017 182 988

## Beschreibung

Der vorliegende Ansatz bezieht sich auf eine Gehäuseeinrichtung für eine Bremsvorrichtung für ein Fahrzeug, einen Kolben für eine Bremsvorrichtung, eine Bremsvorrichtung mit einer Gehäuseeinrichtung und einem Kolben und ein Verfahren zum Betreiben einer Bremsvorrichtung.

Die DE 10 2014 112 014 A1 beschreibt ein Verfahren zum Steuern einer Betriebsbremseinrichtung eines Fahrzeugs sowie eine Betriebsbremsventileinrichtung für eine solche Betriebsbremseinrichtung.

Die Druckschrift DE 10 2019 200 581 A1 offenbart eine Sensoreinheit.

Die Druckschrift DE 10 2017 217 608 A1 offenbart eine Zylindereinheit für ein elektronisches Bremssystem eines Fahrzeugs.

Die Druckschrift DE 10 2016 207 839 A1 offenbart einen Tandem-Hauptbremszylinder.

Die Druckschrift US 2016/0325723 A1 offenbart einen Bremshauptzylinder.

Die Druckschrift US 2017/0182988 A1 offenbart eine Bremsvorrichtung und einen Bremshauptzylinder.

Die Druckschrift DE 10 2016 005 377 A1 offenbart einen Hydraulikzylinder, insbesondere Hauptbremszylinder für hydraulische Bremsanlagen.

Die Druckschrift WO 2016/012066 A1 offenbart ein elektropneumatsiches Regelventil.

Vor diesem Hintergrund ist es die Aufgabe des vorliegenden Ansatzes eine verbesserte Gehäuseeinrichtung für eine Bremsvorrichtung für ein Fahrzeug, einen verbesserten Kolben für eine Bremsvorrichtung, eine Bremsvorrichtung mit einer verbesserten Gehäuseeinrichtung und einem verbesserten Kolben sowie schließlich ein verbessertes Verfahren zum Betreiben einer Bremsvorrichtung zu schaffen.

Diese Aufgabe wird durch eine Gehäuseeinrichtung mit den Merkmalen des Vorrichtungsanspruchs 1, durch einen Kolben nach Anspruch 8, durch eine Bremsvorrichtung nach Anspruch 10, durch ein Verfahren nach Anspruch 11, durch eine Vorrichtung nach Anspruch 12 und durch ein Computerprogramm nach Anspruch 13 gelöst.

Die mit dem vorgestellten Ansatz erreichbaren Vorteile bestehen darin, dass eine Betriebsdauer einer Bremsvorrichtung erhöht werden kann.

Eine Gehäuseeinrichtung für eine Bremsvorrichtung für ein Fahrzeug weist einen Kolbenraum, einen Sensorraum und eine Sensoreinheit auf. Der Kolbenraum ist dazu ausgeformt, um einen Kolben aufzunehmen, der mittels einer Betätigung durch einen Fahrer, über ein Stößel-Feder-Pakekt, linear in dem Kolbenraum beweglich ist. Der Sensorraum ist von dem Kolbenraum getrennt und weist in dem Sensorraum angeordnet die Sensoreinheit auf. Die Sensoreinheit ist dazu ausgebildet, um eine Position und zusätzlich oder alternativ eine Bewegung des in dem Kolbenraum zu erkennen, um einen Bremsvorgangs des Fahrzeugs zu bewirken.

Das Stößel-Kolben-Paket ist in dem Kolbenraum durch die Betätigung des Fahrers beweglich, beispielsweise durch ein manuelles Drücken oder eine Fußbetätigung, um einen Bremswunschs des Fahrers anzuzeigen. Abhängig von der Intensität der Betätigung des Fahrers, also die so bewirkte Linearbewegung des Kolbens, ist die gewünschte Bremsintensität durch den Fahrer erkennbar. Die Sensoreinheit ist dazu ausgebildet, um diese Bewegung, das heißt, einen Hub des Stößels zu sensieren. Da die hier vorgestellte Gehäuseeinrichtung voneinander getrennte Räume für den Kolben und die Sensoreinheit aufweist, wird die Sensoreinheit vorteilhafterweise nicht durch Bewegungen des Kolbens beeinflusst. So kann beispielsweise im Betrieb des Kolbens kein Schmierfett aus dem Kolbenraum zu der Sensoreinheit gelangen, welches eine Funktion der Sensoreinheit beeinträchtigen könnte. Eine Haltbarkeit oder Betriebsdauer der Sensoreinheit kann somit erhöht werden.

Die Sensoreinheit kann zumindest einen Hall-Sensor und zusätzlich oder alternativ Reed-Schalter umfassen, der dazu ausgebildet ist, um ein von dem Stößel ausgehendes Magnetfeld zu sensieren, um die Position und zusätzlich oder alternativ Bewegung des Stößels zu erkennen. So ist ein berührungsloses und dennoch genaues Erkennen der Position und zusätzlich oder alternativ der Bewegung des Stößels ermöglicht.

Der Kolbenraum kann eine Stößelöffnung zur Aufnahme eines Stößelkolbenabschnitts des Kolbens aufweisen, wobei der Sensorraum an einem der Stößelöffnung zugewandten Ende des Kolbenraums angeordnet sein kann. Als der Stößelkolbenabschnitt ist jener Abschnitt des Kolbens zu verstehen, welcher durch den Fahrer zur Anzeige des Bremswunschs betätigt, also in den Kolbenraum gedrückt, wird. Die Stößelöffnung kann an einer Oberseite des Kolbenraums angeordnet sein. Die Stößelöffnung kann eine Durchgangsöffnung durch die Oberseite des Kolbenraums oder durch einen Gehäusedeckel des Kolbenraums sein. Ein Stößel des Stößelkolbenabschnitts kann hierbei durch die Stößelöffnung aus dem Kolbenraum herausragen, um die Betätigung zu ermöglichen. Der Sensorraum kann an einer quer zu der Oberseite verlaufenden Seitenwand der Gehäuseeinrichtung angeordnet sein, um die Linearbewegung des Stößelkolbenabschnitts von der Seite erkennen zu können. Der Sensorraum kann innerhalb oder außerhalb des Kolbenraums angeordnet sein.

Beispielsweise können der Kolbenraum und der Sensorraum durch eine Trennwand fluidisch voneinander getrennt sein. Der Kolbenraum und der Sensorraum können auch hermetisch durch die Trennwand voneinander getrennt sein. So kann ein Übertreten von Flüssigkeit, Fett oder auch Luft zwischen dem Kolbenraum und dem Sensorraum verhindert werden.

Eine Wandstärke der Trennwand kann kleiner ausgeformt sein, als eine an die Trennwand angrenzende Gehäusewandstärke eines Gehäuseabschnitts der Gehäuseeinrichtung und zusätzlich oder alternativ wobei die Trennwand ein nicht-ferromagnetisches Material aufweisen kann. So können Feldlinien eines von dem Stößel ausgehenden Magnetfelds durch die Trennwand sensierbar sein.

Von Vorteil ist es weiterhin, wenn der Sensorraum gemäß einer Ausführungsform einen Deckel aufweist, der eine Außenwand der Gehäuseeinrichtung ausformt und zusätzlich oder alternativ abnehmbar ausgeformt ist. So ist ein Entnehmen oder Austauschen der Sensoreinheit oder einer anderen Elektronikeinrichutng in dem Sensorraum schnell und einfach ermöglicht.

Der Kolbenraum kann eine Druckluftanschlussöffnung aufweisen, insbesondere die in eine dem Sensorraum gegenüberliegende Seitenwand des Kolbenraums münden kann. Eine solche Druckluftanschlussöffnung kann dazu dienen, einen Bremsvorgang des Fahrzeugs auch ohne Betätigung durch den Fahrer zu ermöglichen. Die Druckluftanschlussöffnung kann hierzu beispielsweise im Wesentlichen mittig in die dem Sensorraum gegenüberliegende Seitenwand des Kolbenraums münden, beispielsweise in einen Bereich, in dem eine Kolbenfeder des Kolbens angeordnet sein kann. So kann bei einer Druckluftbetätigung verhindert werden, dass der Stößel durch die Druckluft bewegt wird und es bleibt genug Bauraum für den Sensorraum an der Seitenwand. Insbesondere in einer Ausführungsform mit der Druckluftanschlussöffnung kann der Sensorraum vorteilhafterweise hermetisch von dem Kolbenraum getrennt sein. So kann die Sensoreinheit vor Druckluft geschützt sein und es ist keine zusätzliche Verstärkung für einen Deckel des Sensorraums notwendig.

Gemäß einer Ausführungsform wird eine Bremsvorrichtung mit einer hier vorgestellten Gehäuseeinheit und einem Stößel vorgestellt, der in dem Kolbenraum angeordnet oder anordenbar ist, und der ein Geberelement zur Bestimmung der Position und zusätzlich oder alternativ Bewegung des Stößels in dem Kolbenraum aufweist, insbesondere wobei der Kolben einen Stößelkolbenabschnitt zum Betätigen durch einen Fahrer, einen Steuerkolbenabschnitt und zusätzlich oder alternativ eine zwischen dem Stößelkolbenabschnitt und dem Steuerkolbenabschnitt angeordnete Kolbenfeder aufweist.

Das Geberelement des Stößels kann an einer Außenwand des Stößelkolbenabschnitts angeordnet sein und zusätzlich oder alternativ zumindest einen Magneten zum Erzeugen eines Magnetfelds aufweisen. So ist das vorangehend beschriebene Sensieren des Magnetfelds durch die Gehäuseeinrichtung ermöglicht. Der Magnet kann dem Sensorraum zugewandt an dem Stößelkolbenabschnitt angeordnet sein.

Die Bremsvorrichtung kann eine Fußbremsvorrichtung oder eine Handbremsvorrichtung für ein Fahrzeug sein.

Ein Verfahren zum Betreiben einer der vorangehend beschriebenen Bremsvorrichtungen weist die folgenden Schritte auf:
Erkennen einer Position oder Bewegung des Stößels in dem Kolbenraum; und Ausgeben eines Sensorsignals unter Verwendung der im Schritt des Erkennens erkannten Position oder Bewegung, wobei das Sensorsignal dazu ausgebildet ist, um den Bremsvorgang des Fahrzeugs zu bewirken.

Dieses Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung eines Sensorsignals, um einen Bremsvorgang eines Fahrzeugs zu bewirken. Hierzu kann die Vorrichtung beispielsweise eine Position oder eine Bewegung eines Stößels in dem Kolbenraum erkennen und das Sensorsignal unter Verwendung der erkannten Position oder Bewegung ausgeben. Die Ansteuerung erfolgt über Aktoren wie eine Sensoreinheit zum Erkennen der Position oder Bewegung und eine Ausgabeeinrichtung zum Ausgeben des Sensorsignals.

Ausführungsbeispiele des hier vorgestellten Ansatzes werden in der nachfolgenden Beschreibung mit Bezug zu den Figuren näher erläutert. Es zeigen:
Fig. 1 eine Querschnittsdarstellung eines Fahrzeugs mit einer Bremsvorrichtung mit einer Gehäuseeinrichtung und einem Kolben gemäß einem Ausführungsbeispiel;
Fig. 2 eine Querschnittsdarstellung einer Bremsvorrichtung gemäß einem Ausführungsbeispiel;
Fig. 3 eine Querschnittsdarstellung einer Bremsvorrichtung gemäß einem Ausführungsbeispiel; und
Fig. 4 ein Ablaufdiagramm eines Verfahrens zum Betreiben einer Bremsvorrichtung gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

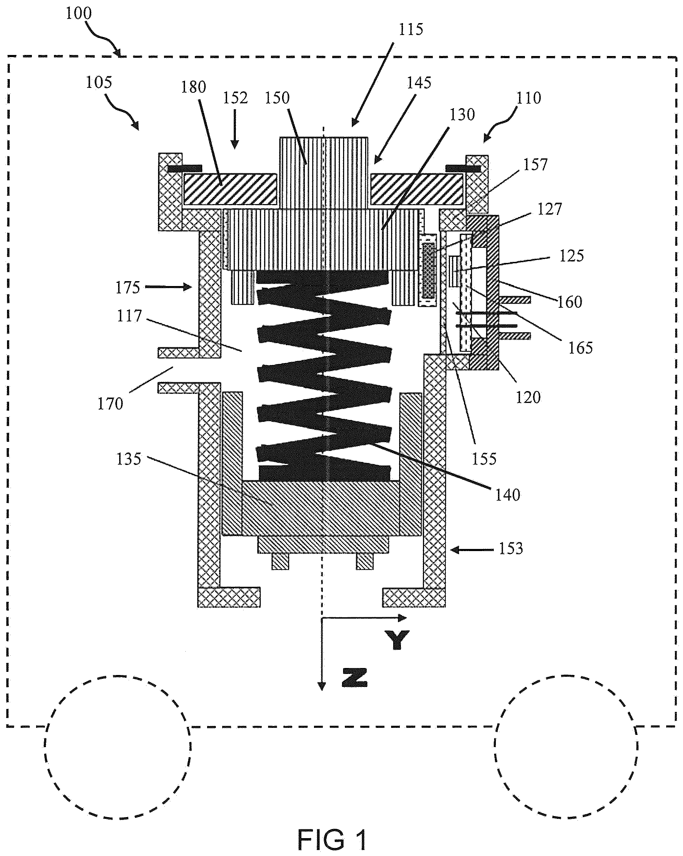

Fig. 1 zeigt eine Querschnittsdarstellung eines Fahrzeugs 100 mit einer Bremsvorrichtung 105 mit einer Gehäuseeinrichtung 110 und einem Stößel 115 gemäß einem Ausführungsbeispiel.

Lediglich beispielhaft ist die Bremsvorrichtung 105 gemäß diesem Ausführungsbeispiel an oder in dem Fahrzeug 100 aufgenommen und/oder als eine Fußbremsvorrichtung zur Betätigung mit einem Fuß ausgeformt. Gemäß einem alternativen Ausführungsbeispiel ist die Bremsvorrichtung 105 als eine Handbremsvorrichtung ausgeformt. Die Bremsvorrichtung 105 weist die Gehäuseeinrichtung 110 und den Stößel 115 auf, der in einem hier gezeigten betriebsbereiten Zustand der Bremsvorrichtung 105 in der Gehäuseeinrichtung 110 aufgenommen ist. Die Bremsvorrichtung 105 ist gemäß diesem Ausführungsbeispiel in einem Ruhezustand dargestellt, in dem die Bremsvorrichtung 105 nicht betätigt wird.

Die Gehäuseeinrichtung 110 weist einen Kolbenraum 117, einen Sensorraum 120 und eine Sensoreinheit 125 auf. Der Kolbenraum 117 ist dazu ausgeformt, um den Stößel 115 aufzunehmen, der mittels einer Betätigung durch einen Fahrer linear in dem Kolbenraum 117 beweglich ist. Der Sensorraum 120 ist von dem Kolbenraum 117 getrennt und weist in dem Sensorraum 120 angeordnet die Sensoreinheit 125 auf. Die Sensoreinheit 125 ist dazu ausgebildet, um eine Position und/oder eine Bewegung des Stößels 115 in dem Kolbenraum 117 zu erkennen, um einen Bremsvorgangs des Fahrzeugs 100 zu bewirken.

Die im Folgenden beschriebenen Details der Gehäuseeinrichtung 110 und/oder des Stößels 115 sind optional:
Der Stößel 115 ist gemäß diesem Ausführungsbeispiel in dem Kolbenraum 117 aufgenommen und weist ein Geberelement 127 zur Bestimmung der Position und/oder Bewegung des Stößels 115 in dem Kolbenraum 117 auf. Gemäß diesem Ausführungsbeispiel weist der Stößel 115 einen Stößelkolbenabschnitt 130 zum Betätigen durch den Fahrer, einen Steuerkolbenabschnitt 135 und/oder eine zwischen dem Stößelkolbenabschnitt 130 und dem Steuerkolbenabschnitt 135 angeordnete Kolbenfeder 140 auf. Das Geberelement 127 ist gemäß diesem Ausführungsbeispiel an einer Außenwand des Stößelkolbenabschnitts 130 angeordnet und/oder weist zumindest einen Magneten zum Erzeugen eines Magnetfelds auf. Der Magnet ist gemäß diesem Ausführungsbeispiel dem Sensorraum 120 zugewandt an dem Stößelkolbenabschnitt 130 angeordnet.

Die Sensoreinheit 125 umfasst zumindest einen Hall-Sensor und/oder Reed-Schalter, der dazu ausgebildet ist, um ein von dem Stößel 115 ausgehendes Magnetfeld zu sensieren, um die Position und/oder Bewegung des Stößels 115 zu erkennen. Der Kolbenraum 117 weist gemäß diesem Ausführungsbeispiel eine Stößelöffnung 145 zur Aufnahme des Stößelkolbenabschnitts 130 des Stößels 115 auf, wobei der Sensorraum 120 an einem der Stößelöffnung 145 zugewandten Ende des Kolbenraums 117 angeordnet ist. Ein Stößel 150 des Stößelkolbenabschnitts 130 ragt gemäß diesem Ausführungsbeispiel aus dem Kolbenraum 117 heraus, um das Betätigen des Stößels 115 durch den Fahrer zu ermöglichen. Die Stößelöffnung 145 ist gemäß diesem Ausführungsbeispiel an einer Oberseite 152 des Kolbenraums 117 angeordnet und/oder wobei der Sensorraum 120 gemäß diesem Ausführungsbeispiel an einer quer zu der Oberseite 152 verlaufenden Seitenwand 153 der Gehäuseeinrichtung 110 angeordnet ist. Der Kolbenraum 117 und der Sensorraum 120 sind gemäß diesem Ausführungsbeispiel durch eine Trennwand 155 fluidisch voneinander getrennt. Eine Wandstärke der Trennwand 155 ist gemäß diesem Ausführungsbeispiel kleiner, als eine an die Trennwand 155 angrenzende Gehäusewandstärke eines Gehäuseabschnitts 157 der Gehäuseeinrichtung 110 und/oder wobei die Trennwand 155 ein nicht-ferromagnetisches Material aufweist. Der Sensorraum 120 weist gemäß diesem Ausführungsbeispiel einen Deckel 160 in der Form eines Elektronikdeckels auf, der eine Außenwand der Gehäuseeinrichtung 110 ausformt und/oder abnehmbar ausgeformt ist. Gemäß diesem Ausführungsbeispiel formt der Deckel 160 eine der Trennwand 155 gegenüberliegende Wand des Sensorraums 120 aus. Die Sensoreinheit 125 ist gemäß diesem Ausführungsbeispiel Teil einer ebenfalls in dem Sensorraum 120 angeordneten Vorrichtung 165, die auch als Elektronik bezeichnet werden kann. Gemäß diesem Ausführungsbeispiel weist der Kolbenraum 117 eine Druckluftanschlussöffnung 170 auf, die gemäß diesem Ausführungsbeispiel in eine dem Sensorraum 120 und/oder der Seitenwand 153 gegenüberliegende Seitenwand 175 des Kolbenraums 117 mündet. Die Druckluftanschlussöffnung 170 mündet gemäß diesem Ausführungsbeispiel im Wesentlichen mittig in die gegenüberliegende Seitenwand 175, in einen Bereich des Kolbenraums 117, in dem die Kolbenfeder 140 des Stößels 115 angeordnet ist.

Im Folgenden werden Details der Bremsvorrichtung 105 und Gehäuseeinrichtung 110 noch einmal genauer beschrieben:
Die Bremsvorrichtung 105 weist die Gehäuseeinrichtung 110 auf, in der der Stößelkolbenabschnitt 130 des Stößels 115 mit einem durch die Stößelöffnung 145 in Form einer Deckelöffnung eines Gehäusedeckels 180 der Gehäuseeinrichtung 110 ragenden Stößel 150 axial beweglich aufgenommen ist. Der Stößel 150 ist gemäß einem Ausführungsbeispiel von oben her, also von einem außerhalb der Gehäuseeinrichtung 110 angeordneten Ende mit einem Betriebsbremsbetätigungsorgan in Form einer Fußbremsplatte verbunden. Wenn daher der Fahrer die Fußbremsplatte betätigt, wird der Stößel 150 in die Stößelöffnung 145 gedrückt und der Stößelkolbenabschnitt 130 wird durch die Betätigungskraft nach unten bewegt. Der Stößelkolbenabschnitt 130 überträgt die Betätigungskraft auf den im Kolbenraum 117 ebenfalls axial beweglich gelagerten Steuerkolbenabschnitt 135, gemäß diesem Ausführungsbeispiel vorzugsweise über die Kolbenfeder 140, welche beispielhaft als eine Druckfeder ausgeformt ist.

Die hier vorgestellte Bremsvorrichtung 105 kann auch als ein Fußbremsmodul mit räumlich getrennter Sensierung bezeichnet werden. Eine Aufgabe des hier vorgestellten Ansatzes besteht darin, in dem Fußbremsmodul den Sensorraum 120, der auch als "Elektronikraum" bezeichnet werden kann, vom Kolbenraum 117, der auch als "Kolbenarbeitsraum" bezeichnet werden kann, zu trennen, und trotzdem den im Kolbenarbeitsraum durch den Fahrer getätigten Hub/Bewegung zu sensieren.

Anders als ein möglicherweise im Elektronikraum positionierbares Potentiometer, dessen mechanischer Hebel in den Kolbenarbeitsraum ragt und dort mechanisch betätigt wird oder ein auf einer Platine im Elektronikraum platzierter Hallsensor, dessen Geberelement mechanisch auf dem im Kolbenbauraum befindlichen Stößel befestigt ist und in den Elektronikraum ragt, oder ein möglicher induktiver Sensor, dessen Spule im Kolbenarbeitsraum positioniert ist und die Spule entweder direkt mit der im Elektronikraum lokalisierten Platine kontaktiert ist oder über einen Flachverbinder, sensiert die Sensoreinheit 125 der hier vorgestellten Gehäuseeinrichtung 110 die Position und/oder Bewegung des Stößels 115 vorteilhafterweise ohne mechanischen Kontakt zu dem Stößel 115, also berührungslos. So können im Kolbenraum 117 befindliches Fett und über eine Lebensdauer entstehender Abrieb nicht in Kontakt mit der Elektronik kommen. Ein weiterer Vorteil ist, dass bei Fußbremsmodulen mit elektronischer Druckregelung, bei denen der Kolbenraum 117 über die Druckluftanschlussöffnung 170 mit Druckluft beaufschlagt wird, um den Stößel 115 unabhängig vom Fahrerwunsch zu bewegen, die Elektronik im Sensorraum 120 bei der hier vorgestellten Gehäuseeinrichtung 110 nicht mit Druckluft beaufschlagt wird und somit auch nicht mit den in der Druckluft befindlichen Medien in Berührung kommt.

Ein grundsätzlicher Erfindungsgedanke besteht also darin, die Sensoreinheit 125 in Form eines detektierenden Elements von dem Geberelement 127 räumlich zu trennen und trotzdem die Funktion zu gewährleisten.

Zusammengefasst realisiert die hier vorgestellte Gehäuseeinrichtung 110 die folgenden Vorteile:
- Die Sensoreinheit 125, welche eine Platine oder Auswerteelektronik umfassen kann, ist vor dem im Kolbenraum 117 vorhanden Fett, dem entstehenden mechanischen Abrieb und vor eventuell entstehendem Kondensat geschützt.
- Bei Fußbremsmodulen mit elektronischer Druckregelung, bei denen der Kolbenarbeitsraum/Elektronikraum mit Druckluft beaufschlagt wird, um den Kolben unabhängig vom Fahrerwunsch zu bewegen, wird die Elektronik einerseits nicht mit Druckluft beaufschlagt und kommt nicht mit den in der Druckluft befindlichen Medien in Berührung und es wird andererseits keine zusätzliche Verstärkung des Deckels 160 oder eine Verwendung zusätzlicher Bauteile benötigt, um dem entstehenden Druck standzuhalten.

Gemäß diesem Ausführungsbeispiel weist der Stößel 115 einen Magnet auf, welcher als Geberelement 127 agiert und/oder am Stößelkolbenabschnitt 130 im Kolbenraum 117 platziert ist. Der Magnet am Stößelkolbenabschnitt 130 folgt direkt dem Fahrerwunsch in Form einer Bewegung oder eines Hubes. Der Kolbenraum 117 ist durch eine, im Bereich des Geberelements 127 auf eine Minimalanforderung reduzierte, Wandstärke vom Sensorraum 120 getrennt, damit die Feldlinien des Geberelements 127 auch im Sensorraum 120 vorherrschen. Ein Gehäusematerial der Gehäuseeinrichtung 110 und/oder die Trennwand 155 mit der entsprechend reduzierten Wandstärke ist gemäß diesem Ausführungsbeispiel in Aluminium und/oder in Kunststoff ausgeführt. Die Sensoreinheit 125 umfasst gemäß diesem Ausführungsbeispiel einen Hall-Chip und/oder Reed-Schalter, welcher auf der Vorrichtung 165 oder einem anderen Trägerelement im Sensorraum 120 positioniert ist und dann diese Feldlinien verwendet, um den Fahrerwunsch in Form eines Hubes oder einer Bewegung zu sensieren und/oder den Schalter zu betätigen. Gemäß einem alternativen Ausführungsbeispiel ist die reduzierte Wandstärke der Trennwand 155 nicht im gleichen Gehäuse realisiert, sondern auch als separates Bauteil, welches in das Gehäuse, zwischen Kolbenraum 117 und Sensorraum 120, montiert ist.

Generell können auch (müssen aber nicht) der Stößel 150, der Stößelkolbenabschnitt 130 und/oder der Stößel 115 als ein (beispielsweise integriertes) Bauteil ausgeführt sein, wobei der untere Teil (hier der Stößelkolbenabschnitt 130) als Geberelement oder Magnetaufnehmer agiert.

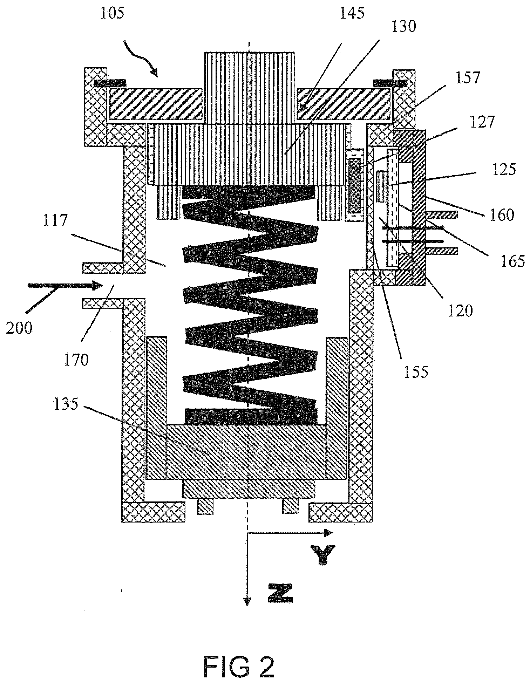

Fig. 2 zeigt eine Querschnittsdarstellung einer Bremsvorrichtung 105 gemäß einem Ausführungsbeispiel. Dabei kann es sich um ein Ausführungsbeispiel der anhand von Fig. 1 beschriebenen Bremsvorrichtung 105 handeln, mit dem Unterschied, dass die Bremsvorrichtung 105 gemäß diesem Ausführungsbeispiel in einem mit Druckluft 200 beaufschlagten Zustand dargestellt ist. Eine Position des Stößelkolbenabschnitts 130 sowie des Geberelements 127 ist gegenüber dem in Fig. 1 gezeigten Ruhezustand der Bremsvorrichtung 105 unverändert. Der Steuerkolbenabschnitt 135 hingegen ist durch die Druckluftbetätigung weiter von dem Stößelkolbenabschnitt 130 wegbewegt worden. Die Trennwand 155 ist gemäß diesem Ausführungsbeispiel dazu ausgeformt, um den Kolbenraum 117 hermetisch von dem Sensorraum 120 zu trennen, sodass bei der Druckluftbetätigung keine Druckluft 200 in den Sensorraum 120 eindringt.

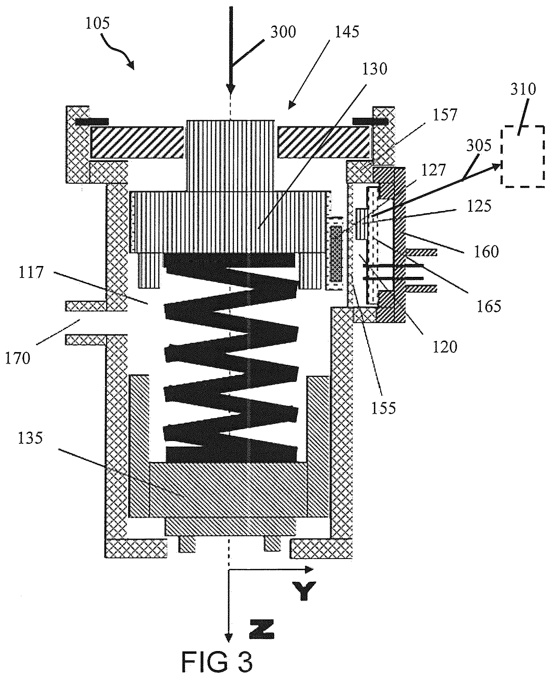

Fig. 3 zeigt eine Querschnittsdarstellung einer Bremsvorrichtung 105 gemäß einem Ausführungsbeispiel. Dabei kann es sich um ein Ausführungsbeispiel der anhand von Fig. 1 oder 2 beschriebenen Bremsvorrichtung 105 handeln, mit dem Unterschied, dass die Bremsvorrichtung 105 gemäß diesem Ausführungsbeispiel in einem durch eine Fußbetätigung 300 eines Fahrers betätigten Zustand dargestellt ist. Eine Position des Stößelkolbenabschnitts 130 sowie des Geberelements 127 ist gegenüber dem in Fig. 1 gezeigten Ruhezustand der Bremsvorrichtung 105 nach unten bewegt angeordnet. Auch der Steuerkolbenabschnitt 135 ist über die Kolbenfeder 140 weiter nach unten bewegt worden.

Die Sensoreinheit 125 erkennt gemäß diesem Ausführungsbeispiel die Position oder Bewegung des Stößels 115 in dem Kolbenraum 117. Außer der Sensoreinheit 125 weist die Vorrichtung 165 gemäß diesem Ausführungsbeispiel eine Ausgabeeinrichtung auf, die dazu ausgebildet ist, um unter Verwendung der erkannten Position oder Bewegung ein Sensorsignal 305 auszugeben, das die erkannte Position oder Bewegung repräsentiert. Die Ausgabeeinrichtung gibt das Sensorsignal 305 gemäß diesem Ausführungsbeispiel an eine Bremseinrichtung 310 des Fahrzeugs aus, die dazu ausgebildet ist, um unter Verwendung des Sensorsignals 305 den Bremsvorgang durchzuführen.

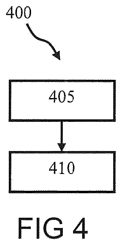

Fig. 4 zeigt ein Ablaufdiagramm eines Verfahrens 400 zum Betreiben einer Bremsvorrichtung gemäß einem Ausführungsbeispiel. Dabei kann es sich um eine der anhand einer der Figuren 1 bis 3 beschriebenen Bremsvorrichtungen handeln.

Das Verfahren 400 weist einen Schritt 405 des Erkennens und einen Schritt des Ausgebens 410 auf. Im Schritt 405 des Erkennens wird eine Position oder Bewegung des Kolbens in dem Kolbenraum erkannt. Im Schritt 410 des Ausgebens wird ein Sensorsignal unter Verwendung der im Schritt 405 des Erkennens erkannten Position oder Bewegung ausgegeben, wobei das Sensorsignal dazu ausgebildet ist, um den Bremsvorgang des Fahrzeugs zu bewirken.

Die hier vorgestellten Verfahrensschritte können wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: Fahrzeug
- 105: Bremsvorrichtung
- 110: Gehäuseeinrichtung
- 115: Stößel
- 117: Kolbenraum
- 120: Sensorraum
- 125: Sensoreinheit
- 127: Geberelement
- 130: Stößelkolbenabschnitt
- 135: Steuerkolbenabschnitt
- 140: Kolbenfeder
- 145: Stößelöffnung
- 150: Stößel
- 152: Oberseite
- 153: Seitenwand
- 155: Trennwand
- 157: Gehäuseabschnitt
- 160: Deckel
- 165: Vorrichtung
- 170: Druckluftanschlussöffnung
- 175: gegenüberliegende Seitenwand
- 180: Gehäusedeckel

- 200: Druckluft

- 300: Fußbetätigung
- 305: Sensorsignal
- 310: Bremseinrichtung

- 400: Verfahren zum Betreiben einer Bremsvorrichtung
- 405: Schritt des Erkennens

## Patentansprüche

1. Gehäuseeinrichtung (110) für eine Bremsvorrichtung (105) für ein Fahrzeug (100), wobei die Gehäuseeinrichtung (110) die folgenden Merkmale aufweist:
einen Kolbenraum (117) zur Aufnahme eines mittels einer Betätigung durch einen Fahrer linear in dem Kolbenraum (117) beweglichen Stößels (115); und
einen von dem Kolbenraum (117) getrennten Sensorraum (120) mit einer Sensoreinheit (125), die dazu ausgebildet ist, um eine Position und/oder eine Bewegung des Stößels (115) in dem Kolbenraum (117) zu erkennen, um einen Bremsvorgang des Fahrzeugs (100) zu bewirken
**dadurch gekennzeichnet, dass**
der Kolbenraum (117) eine Druckluftanschlussöffnung (170) aufweist, wobei der Sensorraum (120) hermetisch von dem Kolbenraum (117) getrennt ist.

2. Gehäuseeinrichtung (110) gemäß Anspruch 1, bei der die Sensoreinheit (125) zumindest einen Hall-Sensor und/oder Reed-Schalter umfasst, der dazu ausgebildet ist, um ein von dem Stößel (115) ausgehendes Magnetfeld zu sensieren, um die Position und/oder Bewegung des Stößels (115) zu erkennen.

3. Gehäuseeinrichtung (110) gemäß einem der vorangegangenen Ansprüche, bei der der Kolbenraum (117) eine Stößelöffnung (145) zur Aufnahme eines Stößelkolbenabschnitts (130) des Stößels (115) aufweist, wobei der Sensorraum (120) an einem der Stößelöffnung (145) zugewandten Ende des Kolbenraums (117) angeordnet ist.

4. Gehäuseeinrichtung (110) gemäß einem der vorangegangenen Ansprüche, bei der der Kolbenraum (117) und der Sensorraum (120) durch eine Trennwand (155) fluidisch und/oder hermetisch voneinander getrennt sind.

5. Gehäuseeinrichtung (110) gemäß Anspruch 4, bei der eine Wandstärke der Trennwand (155) kleiner ist, als eine an die Trennwand (155) angrenzende Gehäusewandstärke eines Gehäuseabschnitts (157) der Gehäuseeinrichtung (110) und/oder wobei die Trennwand (155) ein nicht-ferromagnetisches Material aufweist.

6. Gehäuseeinrichtung (110) gemäß einem der vorangegangenen Ansprüche, bei der der Sensorraum (120) einen Deckel (160) aufweist, der eine Außenwand der Gehäuseeinrichtung (110) ausformt und/oder abnehmbar ausgeformt ist.

7. Gehäuseeinrichtung (110) gemäß einem der vorangegangenen Ansprüche, bei der die Druckluftanschlussöffnung (170) in eine dem Sensorraum (120) gegenüberliegende Seitenwand (175) des Kolbenraums (117) mündet.

8. Bremsvorrichtung (105) mit einer Gehäuseeinrichtung (110) gemäß einem der vorangegangenen Ansprüche, bei der der Stößel (115) in dem Kolbenraum (117) angeordnet oder anordenbar ist und der ein Geberelement (127) zur Bestimmung der Position und/oder Bewegung des Stößels (115) in dem Kolbenraum (117) aufweist, wobei der Stößel (115) einen Stößelkolbenabschnitt (130) zum Betätigen durch einen Fahrer, einen Steuerkolbenabschnitt (135) und eine zwischen dem Stößelkolbenabschnitt (130) und dem Steuerkolbenabschnitt (135) angeordnete Kolbenfeder (140) aufweist.

9. Bremsvorrichtung (105) gemäß Anspruch 8, bei dem das Geberelement (127) an einer Außenwand des Stößelkolbenabschnitts (130) angeordnet ist und/oder zumindest einen Magneten zum Erzeugen eines Magnetfelds aufweist.

10. Verfahren (400) zum Betreiben einer Bremsvorrichtung (105) gemäß Anspruch 8 oder 9, wobei das Verfahren (400) die folgenden Schritte aufweist:
Erkennen (405) einer Position oder Bewegung des Stößels (115) in dem Kolbenraum (117); und
Ausgeben (410) eines Sensorsignals (305) unter Verwendung der im Schritt (405) des Erkennens erkannten Position oder Bewegung, wobei das Sensorsignal (305) dazu ausgebildet ist, um den Bremsvorgang des Fahrzeugs (100) zu bewirken.

11. Vorrichtung (165), die eingerichtet ist, um die Schritte (405, 410) des Verfahrens (400) gemäß Anspruch 10 in entsprechenden Einheiten (125) auszuführen und/oder anzusteuern.

12. Computerprogramm, das dazu eingerichtet ist, das Verfahren (400) gemäß Anspruch 12 auszuführen und/oder anzusteuern.

13. Maschinenlesbares Speichermedium, auf dem das Computerprogramm nach Anspruch 12 gespeichert ist.

## Claims

1. Housing apparatus (110) for a brake device (105) for a vehicle (100), wherein the housing apparatus (110) has the following features:
a piston chamber (117) for receiving a plunger (115) which is movable linearly in the piston chamber (117) by means of an actuation by a driver; and
a sensor chamber (120) separated from the piston chamber (117) having a sensor unit (125) which is designed to detect a position and/or a movement of the plunger (115) in the piston chamber (117) in order to initiate a braking operation of the vehicle (100),
**characterized in that**
the piston chamber (117) has a compressed air connection opening (170), wherein the sensor chamber (120) is hermetically separated from the piston chamber (117).

2. Housing apparatus (110) according to claim 1, wherein the sensor unit (125) comprises at least one Hall sensor and/or reed switch, which is designed to sense a magnetic field emanating from the plunger (115) in order to detect the position and/or movement of the plunger (115).

3. Housing apparatus (110) according to any one of the preceding claims, wherein the piston chamber (117) has a plunger opening (145) for receiving a plunger piston section (130) of the plunger (115), wherein the sensor chamber (120) is arranged at an end of the piston chamber (117) facing the plunger opening (145).

4. Housing apparatus (110) according to any one of the preceding claims, wherein the piston chamber (117) and the sensor chamber (120) are separated from one another fluidically and/or hermetically by a partition wall (155).

5. Housing apparatus (110) according to claim 4, wherein a wall thickness of the partition wall (155) is smaller than a housing wall thickness of a housing section (157) of the housing apparatus (110) adjacent to the partition wall (155) and/or wherein the partition wall (155) has a non-ferromagnetic material.

6. Housing apparatus (110) according to any one of the preceding claims, wherein the sensor chamber (120) has a cover (160) which forms an outer wall of the housing apparatus (110) and/or is formed to be removable.

7. Housing apparatus (110) according to any one of the preceding claims, wherein the compressed air connection opening (170) opens into a side wall (175) of the piston chamber (117) opposite the sensor chamber (120).

8. Brake device (105) having a housing apparatus (110) according to any one of the preceding claims, wherein the plunger (115) is arranged or can be arranged in the piston chamber (117) and has a sensor element (127) for determining the position and/or movement of the plunger (115) in the piston chamber (117), wherein the plunger (115) has a plunger piston section (130) for actuation by a driver, a control piston section (135) and a piston spring (140) arranged between the plunger piston section (130) and the control piston section (135).

9. Brake device (105) according to claim 8, wherein the sensor element (127) is arranged on an outer wall of the plunger piston section (130) and/or has at least one magnet for generating a magnetic field.

10. Method (400) for operating a brake device (105) according to claim 8 or 9, wherein the method (400) has the following steps:
detecting (405) a position or movement of the plunger (115) in the piston chamber (117); and
outputting (410) a sensor signal (305) using the position or movement detected in the detection step (405), wherein the sensor signal (305) is designed to initiate the braking operation of the vehicle (100).

11. Device (165), which is arranged to execute and/or control the steps (405, 410) of the method (400) according to claim 10 in corresponding units (125).

12. Computer program, which is arranged to execute and/or control the method (400) according to claim 12.

13. Machine-readable storage medium on which the computer program according to claim 12 is stored.

## Revendications

1. Système de logement (110) pour un dispositif de freinage (105) pour un véhicule (100), dans lequel le système de logement (110) présente les caractéristiques suivantes :
un espace de piston (117) pour la réception d'un poussoir (115) mobile au moyen d'un actionnement par un conducteur linéairement dans l'espace de piston (117) ; et
un espace de capteur (120) séparé par l'espace de piston (117) avec une unité de capteur (125) qui est formée afin de reconnaître une position et/ou un mouvement du poussoir (115) dans l'espace de piston (117) afin de provoquer un processus de freinage du véhicule (100),
**caractérisé en ce que**
l'espace de piston (117) présente une ouverture de raccordement d'air comprimé (170), dans lequel l'espace de capteur (120) est hermétiquement séparé de l'espace de piston (117).

2. Système de logement (110) selon la revendication 1, pour lequel l'unité de capteur (125) comprend au moins un capteur à effet Hall et/ou un commutateur Reed qui est formé afin de détecter un champ magnétique sortant du poussoir (115) afin de reconnaître la position et/ou le déplacement du poussoir (115).

3. Système de logement (110) selon l'une quelconque des revendications précédentes, pour lequel l'espace de piston (117) présente une ouverture de poussoir (145) pour la réception d'une section de piston de poussoir (130) du poussoir (115), dans lequel l'espace de capteur (120) est agencé au niveau d'une extrémité de l'espace de piston (117) tournée vers l'ouverture de poussoir (145).

4. Système de logement (110) selon l'une quelconque des revendications précédentes, pour lequel l'espace de piston (117) et l'espace de capteur (120) sont séparés l'un de l'autre de manière fluidique et/ou hermétique par une paroi de séparation (155).

5. Système de logement (110) selon la revendication 4, pour lequel une épaisseur de la paroi de séparation (155) est inférieure à une épaisseur de paroi de logement contiguë à la paroi de séparation (155) d'une section de logement (157) du système de logement (110) et/ou dans lequel la paroi de séparation (155) présente un matériau non ferromagnétique.

6. Système de logement (110) selon l'une quelconque des revendications précédentes, pour lequel l'espace de capteur (120) présente un couvercle (160) qui forme une paroi extérieure du système de logement (110) et/ou est formé de manière amovible.

7. Système de logement (110) selon l'une quelconque des revendications précédentes, pour lequel l'ouverture de raccordement d'air comprimé (170) débouche dans une paroi latérale (175) de l'espace de piston (117) opposée à l'espace de capteur (120).

8. Dispositif de freinage (105) avec un système de logement (110) selon l'une quelconque des revendications précédentes, pour lequel le poussoir (115) est ou peut être agencé dans l'espace de piston (117) et qui présente un élément transmetteur (127) pour la détermination de la position et/ou du mouvement du poussoir (115) dans l'espace de piston (117), dans lequel le poussoir (115) présente une section de piston de poussoir (130) pour l'actionnement par un conducteur, une section de piston de commande (135) et un ressort à piston (140) agencé entre la section de piston de poussoir (130) et la section de piston de commande (135).

9. Dispositif de freinage (105) selon la revendication 8, pour lequel l'élément transmetteur (127) est agencé au niveau d'une paroi extérieure de la section de piston de poussoir (130) et/ou présente au moins un aimant pour la génération d'un champ magnétique.

10. Procédé (400) pour le fonctionnement d'un dispositif de freinage (105) selon la revendication 8 ou 9, dans lequel le procédé (400) présente les étapes suivantes :
la reconnaissance (405) d'une position ou d'un mouvement du poussoir (115) dans l'espace de piston (117) ; et
l'émission (410) d'un signal de capteur (305) en utilisant la position ou le mouvement reconnu à l'étape (405) de la reconnaissance, dans lequel le signal de capteur (305) est formé afin de provoquer le processus de freinage du véhicule (100).

11. Dispositif (165) qui est conçu pour mettre en œuvre et/ou commander les étapes (405, 410) du procédé (400) selon la revendication 10 dans des unités correspondantes (125).

12. Programme informatique qui est conçu pour mettre en œuvre et/ou commander le procédé (400) selon la revendication 12.

13. Support de stockage lisible par machine, sur lequel le programme informatique selon la revendication 12 est stocké.
